(19) Europäisches Patentamt
European Patent Office
Office européen des brevets

(11) **EP 4 459 889 A1**

(12) **EUROPEAN PATENT APPLICATION**

(43) Date of publication:
**06.11.2024 Bulletin 2024/45**

(21) Application number: **24172055.6**

(22) Date of filing: **24.04.2024**

(51) International Patent Classification (IPC):
**H04B 7/06** (2006.01)     **H04B 7/10** (2017.01)

(52) Cooperative Patent Classification (CPC):
**H04B 7/06952; H04B 7/10**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.04.2023 KR 20230054265**
**22.06.2023 KR 20230080637**

(71) Applicant: **Samsung Electronics Co., Ltd.**
**Suwon-si, Gyeonggi-do 16677 (KR)**

(72) Inventors:
• **KIM, Jaein**
**16677 Suwon-si (KR)**
• **KIM, Jinho**
**16677 Suwon-si (KR)**
• **LEE, Junho**
**16677 Suwon-si (KR)**
• **CHOI, Yoojin**
**16677 Suwon-si (KR)**

(74) Representative: **Marks & Clerk LLP**
**15 Fetter Lane**
**London EC4A 1BW (GB)**

(54) **WIRELESS COMMUNICATION DEVICE FOR PERFORMING BEAM SWEEPING OPERATION AND OPERATION METHOD THEREOF**

(57)     An operation method of a wireless communication device includes receiving initial reference signals based on sweeping of a first beam pair subset, the initial reference signals including first and second reference signals received via first and second reception beams, the first reception beams and the second reception beams being included in the first beam pair subset and having different polarizations, measuring first received powers of the first reference signals and second received powers of the second reference signals, determining a first beam pair for receiving first data based on the first received powers and the second received powers, updating the first beam pair subset based on the first received powers or the second received powers, determining a second beam pair for receiving second data based on received powers of new reference signals for the updated beam pair subset, and receiving the second data based on the second beam pair.

FIG. 4

START

RECEIVE REFERENCE SIGNALS BASED ON SWEEPING OF BEAM PAIR SUBSET THAT INCLUDES SECOND BEAM PAIRS FROM AMONG FIRST BEAM PAIRS FORMED BETWEEN FIRST RX BEAMS AND SECOND RX BEAMS — S201

MEASURE FIRST RECEIVED POWERS OF REFERENCE SIGNALS RECEIVED VIA FIRST RX BEAMS INCLUDED IN SECOND BEAM PAIRS AND SECOND RECEIVED POWERS OF REFERENCE SIGNALS RECEIVED VIA SECOND RX BEAMS INCLUDED IN SECOND BEAM PAIRS — S203

DETERMINE FIRST BEAM PAIR FOR DATA RECEPTION, BASED ON FIRST RECEIVED POWERS AND SECOND RECEIVED POWERS — S205

UPDATE BEAM PAIR SUBSET, BASED ON AT LEAST ONE OF FIRST RECEIVED POWERS AND SECOND RECEIVED POWERS — S207

DETERMINE NEW FIRST BEAM PAIR FOR DATA RECEPTION, BASED ON NEW FIRST RECEIVED POWERS AND NEW SECOND RECEIVED POWERS FOR UPDATED BEAM PAIR SUBSET — S209

END

EP 4 459 889 A1

**Description**

BACKGROUND

The inventive concepts relate to a wireless communication device for performing a beam sweeping operation.

In recent years, communication systems utilizing millimeter wave (mmWave) bands have been actively implemented in order to improve transmission rates in 5th-generation (5G) wireless communication systems. Use of mmWave bands may lead to higher transmission capacity due to broad bandwidths but may also result in higher channel path attenuation due to the nature of higher frequency bands. Accordingly, a beamforming process for improving transmission and reception performance by utilizing multiple antennas is implemented when using mmWave bands.

During the beam forming process between a transmitter and a receiver, reception (Rx) beams may have various polarizations.

SUMMARY

The inventive concepts provides a beam sweeping method performed by a wireless communication device. Specifically, the inventive concepts provides a method, performed by a wireless communication device, of sweeping reception beams having a plurality of polarizations that may improve the transmission and reception performance of the wireless communication device.

According to embodiments, there is provided an operation method of a wireless communication device, the operation method including receiving initial reference signals based on sweeping of a first beam pair subset, the initial reference signals including first reference signals received via first reception beams and second reference signals received via second reception beams, the first reception beams and the second reception beams being included in the first beam pair subset, and the first reception beams having a polarization different from that of a polarization of the second reception beams, measuring first received powers of the first reference signals and second received powers of the second reference signals, determining a first beam pair for receiving first data based on the first received powers and the second received powers, updating the first beam pair subset based on at least one of the first received powers or the second received powers to obtain an updated beam pair subset, determining a second beam pair for receiving second data based on received powers of new reference signals for the updated beam pair subset, and receiving the second data based on the second beam pair.

According to embodiments, there is provided a wireless communication device including a first antenna array including a plurality of first antenna elements configured to form first reception beams, a second antenna array including a plurality of second antenna elements configured to form second reception beams, the second reception beams having a polarization different than a polarization of the first reception beams, and processing circuitry configured to receive, via the first antenna array and the second antenna array, initial reference signals based on sweeping of a first beam pair subset including, the initial reference signals including first reference signals received via the first reception beams and second reference signals received via the second reception beams, and the first reception beams and the second reception beams being included in the first beam pair subset, measure first received powers of the first reference signals and second received powers of the second reference signals, determine a first beam pair for receiving first data based on the first received powers and the second received powers, update the first beam pair subset based on at least one of the first received powers or the second received powers to obtain an updated beam pair subset, determine a second beam pair for receiving second data based on received powers of new reference signals for the updated beam pair subset, and receive the second data based on the second beam pair.

According to embodiments, there is provided an operation method of the wireless communication device, the operation method including receiving initial reference signals based on sweeping of a first beam pair subset, the initial reference signals including first reference signals received via first reception beams and second reference signals received via second reception beams, the first reception beams and the second reception beams being included in the first beam pair subset, and the first reception beams having a polarization different from that of a polarization of the second reception beams, measuring first received powers of the first reference signals and second received powers of the second reference signals, stopping the measuring of both the first received powers and the second received powers in response to determining that respective first received powers among the first received powers corresponding to a portion of the first reference signals increase and then decrease according to a measurement order of the portion of the first reference signals, the measurement order of the portion of the first reference signals corresponding to the sweeping, and respective second received powers among the second received powers corresponding to a portion of the second reference signals increase and then decrease according to a measurement order of the portion of the second reference signals, the measurement order of the portion of the second reference signals corresponding to the sweeping, updating the first beam pair subset based on at least one of the first received powers or the second received powers to obtain an updated beam pair subset, measuring third received powers and fourth received powers based on the updated beam pair subset, estimating fifth received powers for first beam pairs based on information about a correlation between the first reception beams and the second reception beams, determining a second beam pair for receiving data based on the third received powers, the fourth received powers, and the fifth received powers, and receiving the data based on the second beam pair.

In some embodiments, the first receptions beams are associated with a first antenna array of the wireless communication device and the second reception beams are associated with a second antenna array. Each of the first reception beams may comprise a set of parameters for receive beamforming in which the signals received at the first antenna array are combined. Each of the second reception beams may comprise a set of parameters for receive beamforming in which the signals received at the second antenna array are combined. The first beam pair subset may comprise a plurality of pairs, each pair comprising one of the first reception beams and one of the second reception beams.

Sweeping the first beam pair subset may comprises iterating between the selection of different pairs of the first reception beams and the second reception beams for receiving the initial reference signals.

The first received powers may comprise for each of the first reference signals, a measured power level for the signal. The second received powers may comprise for each of the second reference signals, a measured power level for the signal.

In some embodiments, the method may comprise, based on the determined first beam pair, receiving first data based on the first received powers. In some embodiments, the method may comprise, based on the determined second beam pair, receiving second data based on the second received powers. The processing circuitry of the wireless communication device may be configured to perform these steps.

The updated beam pair subset may comprise one or more additional beam pairs that were not present in the first beam pair subset.

The received powers of new reference signals may comprise measured (measured by the device as part of the method) third received powers of the new reference signals received via third receptions beams including in the updated beam pair subset. The received powers of new reference signals may comprise measured (measured by the device as part of the method) fourth received powers of the new reference signals received via fourth receptions beams including in the updated beam pair subset. The third reception beams may have a polarization different from that of a polarization of the fourth reception beams.

At least some of the above and other features of the invention are set out in the claims.

BRIEF DESCRIPTION OF THE DRAWINGS

Embodiments of the inventive concepts will be more clearly understood from the following detailed description taken in conjunction with the accompanying drawings in which:

FIG. 1 is a block diagram of a wireless communication device according to embodiments;
FIG. 2 is a block diagram of an analog beamforming apparatus according to embodiments;
FIG. 3A illustrates an operation procedure of a wireless communication device and a base station, according to embodiments;
FIG. 3B illustrates an initialized beam pair subset according to embodiments;
FIG. 4 illustrates an operation procedure of a wireless communication device, according to embodiments;
FIG. 5 illustrates an operation procedure of a wireless communication device, according to embodiments;
FIGS. 6A to 6C illustrate a method of updating a beam pair subset by fixing one polarization, according to embodiments;
FIGS. 7A to 7C illustrate a method of updating a beam pair subset regardless of polarization, according to embodiments;
FIGS. 8A and 8B illustrate a method of updating a beam pair subset by selecting a plurality of beams based on received powers for each polarization, according to embodiments;
FIGS. 9A and 9B illustrate a beam pair subset update method performed by a wireless communication device, according to embodiments;
FIGS. 10A and 10B illustrate a beam pair subset update method performed by a wireless communication device, according to embodiments;
FIG. 11A illustrates a method of stopping beam sweeping, according to embodiments;
FIG. 11B illustrates a method of stopping beam sweeping, according to embodiments;
FIG. 12A illustrates an operation procedure of a wireless communication device, according to embodiments;
FIG. 12B illustrates an operation procedure of a wireless communication device, according to embodiments; and
FIG. 13 is a block diagram of an electronic device according to embodiments.

DETAILED DESCRIPTION

A base station (BS) communicates with a wireless communication device, and as an entity that allocates communication network resources to the wireless communication device, the BS may be one of a cell, a NodeB (NB), an evolved Node B (eNB), a next generation Node B (gNB), next generation radio access network (NG-RAN), a radio access unit, a BS controller, and/or a node on a network.

A wireless communication device is an entity that communicates with a BS or another wireless communication device, and may be one of a node, a user equipment (UE), a next generation UE (NG UE), a mobile station (MS), a mobile equipment (ME), a device, and/or a terminal.

Furthermore, the wireless communication device may include at least one of a smartphone, a tablet personal computer (PC), a mobile phone, a video phone, an e-book reader, a desktop PC, a laptop PC, a netbook computer, a personal digital assistant (PDA), a portable multimedia player (PMP), an MP3 player, medical equipment, a camera, or a wearable device. The wireless communication device may also include at least one of a television, a digital video disk (DVD) player, an audio system, a refrigerator, an air conditioner, a cleaner, an oven, a microwave oven, a washing machine, an air purifier, a set-top box, a home automation control panel, a security control panel, a media box (e.g., Samsung HomeSync™, Apple TV™, or Google TV™), a game console (e.g., Xbox™ or PlayStation™), an electronic dictionary, an electronic key, a camcorder, or an electronic picture frame. The wireless communication device may also include at least one of various medical devices (e.g., various portable medical measuring devices (a blood glucose meter, a heart rate monitor, a blood pressure monitor, or a body temperature monitor), a magnetic resonance angiography (MRA) device, a magnetic resonance imaging (MRI) device, a computed tomography (CT) device, an imaging device, an ultrasound device, or the like), a navigation device, a global navigation satellite system (GNSS)), an event data recorder (EDR), a flight data recorder (FDR), an automotive infotainment device, marine electronic equipment (e.g., a marine navigation device, a gyrocompass, or the like), avionics, a security device, a car head unit, an industrial or household robot, a drone, an automated teller machine (ATM) in a financial institution, a point-of-sale (POS) system in a store, or Internet-of-things (IoT) devices (e.g., a light bulb, various sensors, a sprinkler system, a fire alarm, a thermostat, street lights, a toaster, workout equipment, a hot water tank, a heater, a boiler, etc.). In addition, the wireless communication device may include various types of multimedia systems capable of performing communication functions.

Hereinafter, embodiments will be described in detail with reference to the accompanying drawings.

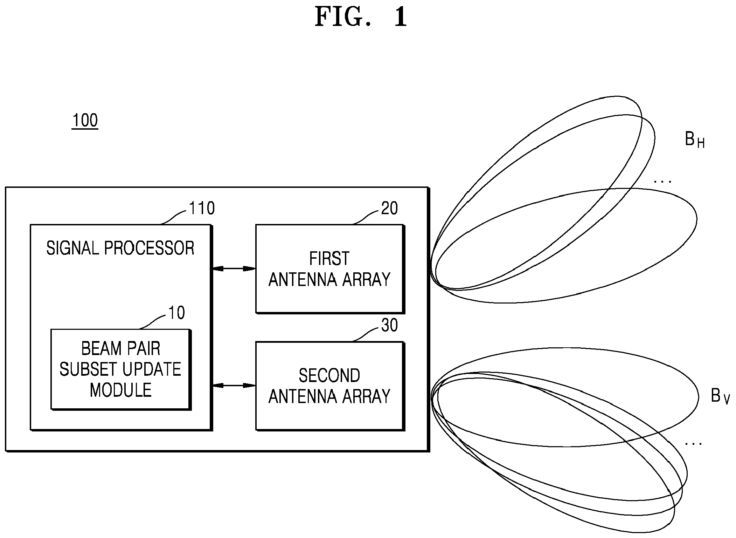

FIG. 1 is a block diagram of a wireless communication device according to embodiments.

Referring to FIG. 1, a wireless communication device 100 may include a signal processor 110, a first antenna array 20, and/or a second antenna array 30. The signal processor 110 may include a beam pair subset update module 10.

The signal processor 110 processes a transmitted signal and/or a received signal. The signal processor 110 may form a first reception (Rx) beam via the first antenna array 20 and/or a second Rx beam via the second antenna array 30. The first antenna array 20 may include a plurality of first antenna elements for forming first Rx beams. The second antenna array 30 may include a plurality of second antenna elements for forming second Rx beams having a polarization different than that of the first Rx beams. For example, the first antenna array 20 may form first Rx beams with a horizontal polarization, and the second antenna array 30 may form second Rx beams with a vertical polarization. That is, the wireless communication device 100 may form beams having dual polarization characteristics. Hereinafter, in the inventive concepts, a first Rx beam refers to an Rx beam with a horizontal polarization, and a second Rx beam refers to an Rx beam with a vertical polarization. The wireless communication device 100 may sweep beams having different polarizations over all beam directions.

Moreover, according to embodiments, the wireless communication device 100 may include three or more antenna arrays, each forming Rx beams with a different polarization. Even in this case, a sweeping method of the inventive concepts may be applied in a similar manner.

The signal processor 110 may receive, via the first antenna array 20 and the second antenna array 30, reference signals based on sweeping of a beam pair subset including second beam pairs from among first beam pairs formed between the first Rx beams and the second Rx beams.

That is, the signal processor 110 may receive, via the first antenna array, reference signals based on first Rx beams in the beam pair subset. The signal processor 110 may receive, via the second antenna array 30, reference signals based on second Rx beams in the beam pair subset. A set of the first Rx beams and the second Rx beams that the signal processor 110 may respectively form via the first antenna array 20 and the second antenna array 30 (e.g., all of the combinations of beams included in respective codebooks for the first antenna array 20 and the second antenna array 30) may be referred to as a beam pair set, and the beam pair subset may be a part of the beam pair set. That is, the first beam pairs may refer to beam pairs in the beam pair set, and the second beam pairs may refer to beam pairs in the beam pair subset. Each beam pair consists of a pair of (first Rx beam, second Rx beam). According to embodiments, for example, each beam pair consists of only one first Rx beam from among the first Rx beams that the signal processor 110 may form via the first antenna array 20, and only one second Rx beam from among the second Rx beams that the signal processor 110 may form via the second antenna array 30.

The signal processor 110 may measure first received powers of the reference signals received via the first Rx beams included in the second beam pairs and second received powers of the reference signals received via the second Rx beams included in the second beam pairs. Hereinafter, in the inventive concepts, first received powers refer to received powers of reference signals received via first Rx beams in a beam pair subset, and second received powers refer to received powers of the reference signals received via second Rx beams in the beam pair subset.

The signal processor 110 may determine a first beam pair for data reception, based on the first received powers and the second received powers. For example, the signal processor 110 may determine a beam pair having a largest sum of a first received power and a second received power as being the first beam pair. The signal processor 110 may receive data based on the first beam pair. The beam pair subset update module 10 may update the beam pair subset, based on at least one of the first received powers and the second received powers. The signal processor 110 may measure new first received powers and new second received powers based on sweeping of the updated beam pair subset. That is, the signal processor 110 may receive reference signals based on the updated beam pair subset, and measure a first received power of a reference signal on a first Rx beam and a second received power of the reference signal on a second Rx beam. The signal processor 110 may determine a new first beam pair for data reception, based on new first received powers and new second received powers for the updated beam pair subset. For example, the signal processor 110 may determine a beam pair having a largest sum of a new first received power and a new second received power as being a new first beam pair.

The new first beam pair may be a beam pair different than the first beam pair. When the sum of the new first received power and the new second received power is less than the sum of the existing first received power and the existing second received power, the new first beam pair may be the same as (or similar to) the existing first beam pair. That is, when the sum of the new first received power and the new second received power is less than the sum of the existing first received power and the existing second received power, the signal processor 110 maintains the first beam pair for data reception.

Moreover, the beam pair subset update module 10 of the signal processor 110 may perform a beam pair subset update according to embodiments as described below in the inventive concepts.

In a beamforming process, each of the first antenna array 20 and the second antenna array 30 uses a predefined (or alternatively, given) beam codebook. Beam characteristics of each of the first antenna array 20 and the second antenna array 30 may be mutually affected by a beam direction. When the signal processor 110 performs a search over all combinations of beam pairs to select an optimal (or high-quality) beam pair (e.g., an Rx beam pair corresponding to received reference signals having a highest signal power level), the search may cause unnecessary (e.g., excessive) training overhead and delay, and a difference between an angle of arrival (AoA) corresponding to the selected beam pair and an AoA corresponding to an actual beam direction, which may be caused due to mobility of the wireless communication device 100, may degrade transmission and reception performance. Therefore, the inventive concepts provide an efficient beam training process that takes into account a correlation between the first antenna array 20 and the second antenna array 30.

Accordingly, the wireless communication device 100 may efficiently select an Rx beam pair for receiving data. Furthermore, the wireless communication device 100 may adaptively select a beam pair subset for sweeping. The wireless communication device 100 may reduce the training overhead incurred to find an optimal (or high-quality) Rx beam pair by adaptively selecting a beam pair subset for sweeping. The wireless communication device 100 may efficiently determine an Rx beam pair in a variable channel environment. The wireless communication device 100 may determine a beam pair for data reception by using channel power for an Rx beam. The wireless communication device 100 may stop beam sweeping by using a channel power for an Rx beam.

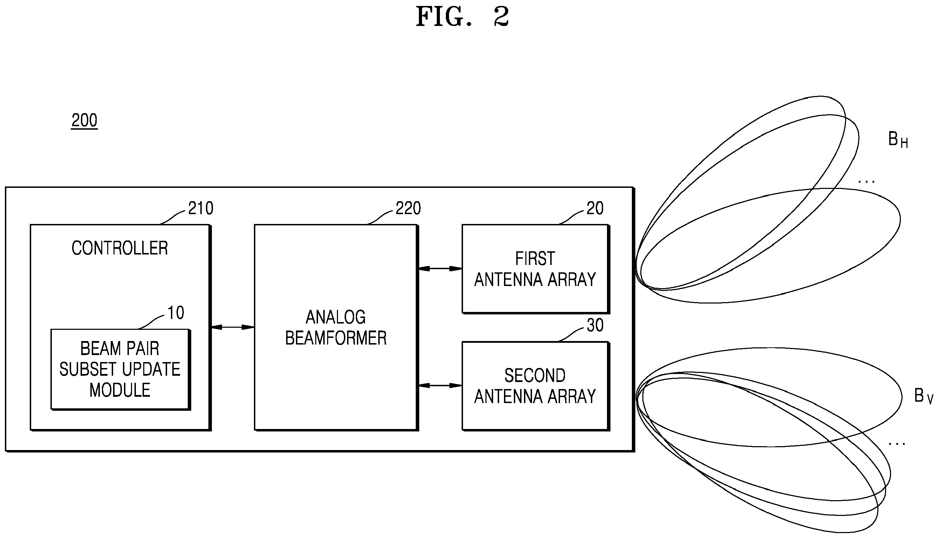

FIG. 2 is a block diagram of a beamforming apparatus according to embodiments. A beamforming apparatus 200 of FIG. 2 will be described in conjunction with FIG. 1, and descriptions already provided above will be omitted below.

Referring to FIG. 2, the beamforming apparatus 200 may include a controller 210, an analog beamformer 220, a first antenna array 20, and/or a second antenna array 30. The controller 210 may include a baseband processor (not shown) and a beam pair subset update module 10. The analog beamformer 220 may include an analog to digital converter (ADC) and a digital to analog converter (DAC) both connected to the first antenna array 20, and an ADC and a DAC both connected to the second antenna array 30. According to embodiments, the ADC and/or DAC connected to the first antenna array 20 may be the same as, similar to, or different from the ADC and/or DAC connected to the second antenna array 30. Also, the analog beamformer 220 may include a plurality of phase shifters and a plurality of signal attenuators connected to each of the first antenna array 20 and the second antenna array 30. The analog beamformer 220 may further include an amplifier, a mixer, an oscillator, and the like. The analog beamformer 220 may convert radio frequency (RF) signals received through the first antenna array 20 and the second antenna array 30 into baseband signals.

Like the signal processor 110 of FIG. 1, the controller 210 may form first Rx beams via the first antenna array 20 and second Rx beams via the second antenna array 30. The controller 210 may perform beamforming by adjusting a phase and a magnitude of each signal transmitted and received by the first antenna array 20 and the second antenna array 30. For example, the controller 210 may adjust the phases and magnitudes of signals transmitted and received by the first antenna array 20 and the second antenna array 30 by controlling phases in (e.g., using) a plurality of phase shifters and gains of (e.g., using) a plurality of signal attenuators in the analog beamformer 220.

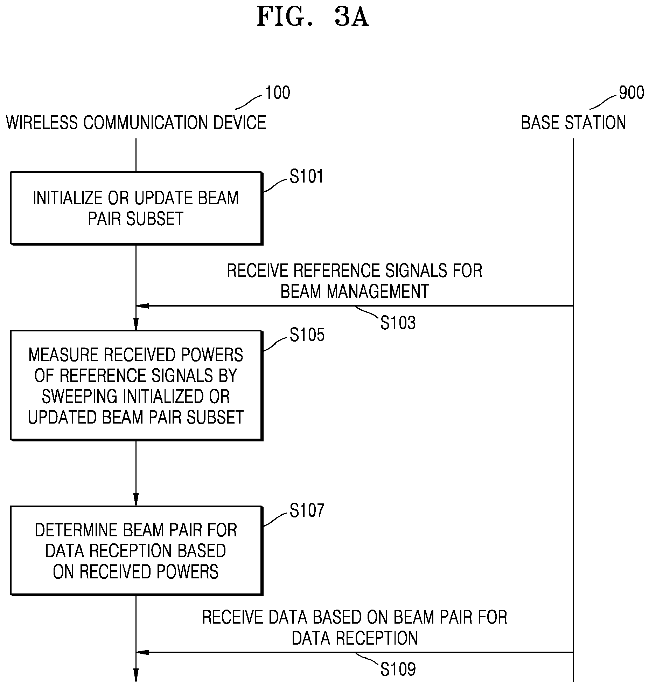

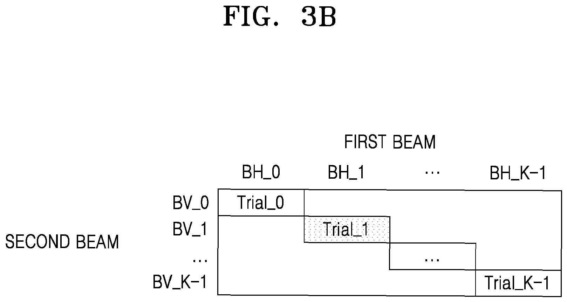

FIG. 3A illustrates an operation procedure of a wireless communication device and a BS, according to embodiments. FIG. 3B illustrates an initialized beam pair subset according to embodiments. The operation procedure of FIG. 3A and the initialized beam pair subset of 3B will be described in conjunction with FIG. 1.

Referring to FIG. 3A, in operation S101, a wireless communication device 100 according to embodiments may initialize or update a beam pair subset.

In operation S103, the wireless communication device 100 may receive reference signals for beam management from a BS 900. The wireless communication device 100 may receive reference signals by using beam pairs in the beam pair subset. In detail, the wireless communication device 100 may receive the reference signals by changing beam pairs for each reference signal. In other words, the wireless communication device 100 may receive the reference signals based on sweeping of the beam pairs.

In operation S105, the wireless communication device 100 may measure received powers of reference signals by sweeping the initialized or updated beam pair subset. In detail, the wireless communication device 100 may measure first received powers and second received powers of the reference signals while changing beam pairs in the beam pair subset. That is, the wireless communication device 100 may measure levels of the first received powers and levels of the second received powers of the reference signals while changing the beam pairs in the beam pair subset. The level of a first received power and the level of a second received power may each be one of reference signal received power (RSRP), reference signal received quality (RSRQ), received signal strength indicator (RSSI), and/or signal to interference plus noise ratio (SINR).

In operation S107, the wireless communication device 100 may determine a beam pair for data reception based on the received powers. For example, the wireless communication device 100 may determine a beam pair having a largest received power as a beam pair for data reception.

In operation S109, the wireless communication device 100 may receive, from the BS 900, data based on the beam pair for data reception (e.g., the beam pair determined in operation S107). When the wireless communication device 100 further receives reference signals from the BS 900, the above-described procedure may be repeated. According to embodiments, operation S109 may include setting a phase and magnitude for each beam of the beam pair, receiving a communication signal(s) via the beam pair, and processing the communication signal(s) (e.g., downconverting, filtering, amplifying, analog-to-digital converting, decoding, etc.) to obtain the data.

Referring to FIG. 3B, the wireless communication device 100 may configure an initial beam pair subset including beam pairs, each of the beam pairs including a first Rx beam and a second Rx beam with a same (e.g., common) index. The initial beam pair subset of FIG. 3B may be swept in the order of Trial_0, Trial_1,..., and Trial_K-1. The initial beam pair subset includes beam pairs (BV_0, BH_0), (BV_1, BH_1),..., and (BV_K-1, BH_K-1). That is, K is a positive integer. In examples herein, it is assumed that a codebook for each of the first antenna array 20 and the second antenna array 30 is based on K codewords. A codebook may be different for each of the first antenna array 20 and the second antenna array 30, and K may have different values. The number of beam pairs included in the beam pair subset is T (T is an integer greater than or equal to 1), and T may have various values. When the beam pair subset includes beam pairs (BV_0, BH_0), (BV_1, BH_1),..., and (BV_K-1, BH_K-1), T=K. Unlike the example of the initial beam pair subset including beam pairs each including a first Rx beam and a second Rx beam with a same (e.g., common) index, the wireless communication device 100 will use an initial beam pair subset including any beam pairs. The wireless communication device 100 may update the initial beam pair subset with a beam pair subset including other beam pairs.

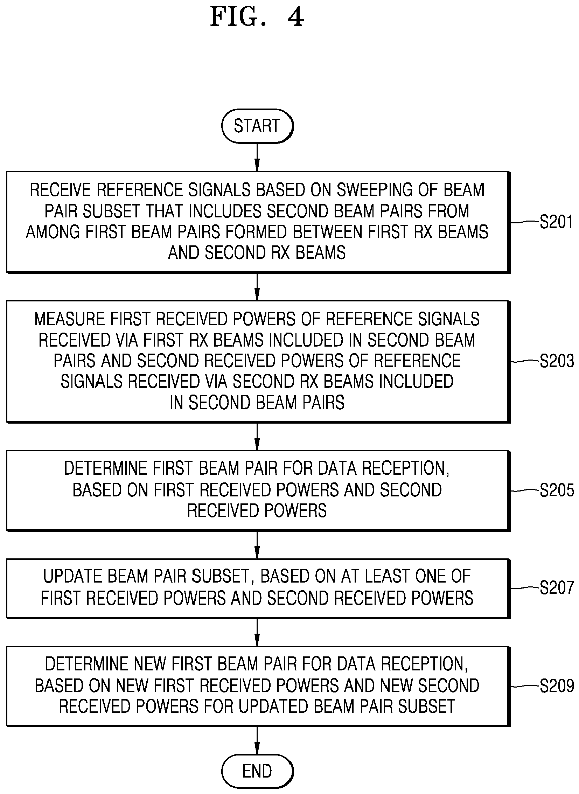

FIG. 4 illustrates an operation procedure of a wireless communication device, according to embodiments. The operation procedure of FIG. 4 will be described in conjunction with FIG. 1.

Referring to FIG. 4, in operation S201, the wireless communication device 100 may receive reference signals based on sweeping of a beam pair subset that includes second beam pairs from among first beam pairs formed between first Rx beams and second Rx beams.

In operation S203, the wireless communication device 100 may measure first received powers of the reference signals received via first Rx beams included in the second beam pairs and second received powers of the reference signals received via second Rx beams included in the second beam pairs.

In operation S205, the wireless communication device 100 may determine a first beam pair for data reception, based on the first received powers and the second received powers. For example, the wireless communication device 100 may determine a beam pair having a largest sum of a first received power (e.g., first received power level) and a second received power (e.g., second received power level) as the first beam pair for data reception.

In operation S207, the wireless communication device 100 may update the beam pair subset, based on at least one of the first received powers and/or the second received powers. That is, the wireless communication device 100 may update the beam pair subset according to a beam pair subset update method as described below in the inventive concepts.

In operation S209, the wireless communication device 100 may determine a new first beam pair for data reception, based on new first received powers and new second received powers for the updated beam pair subset. The new first beam pair may be a beam pair different than the first beam pair. When the sum of a new first received power and a new second received power is less than the sum of the existing first received power and the existing second received power, the new first beam pair may be the same as (or similar to) the existing first beam pair. That is, when the sum of the new first received power and the new second received power is less than the sum of the existing first received power and the existing second received power, the wireless communication device 100 may maintain the first beam pair for data reception.

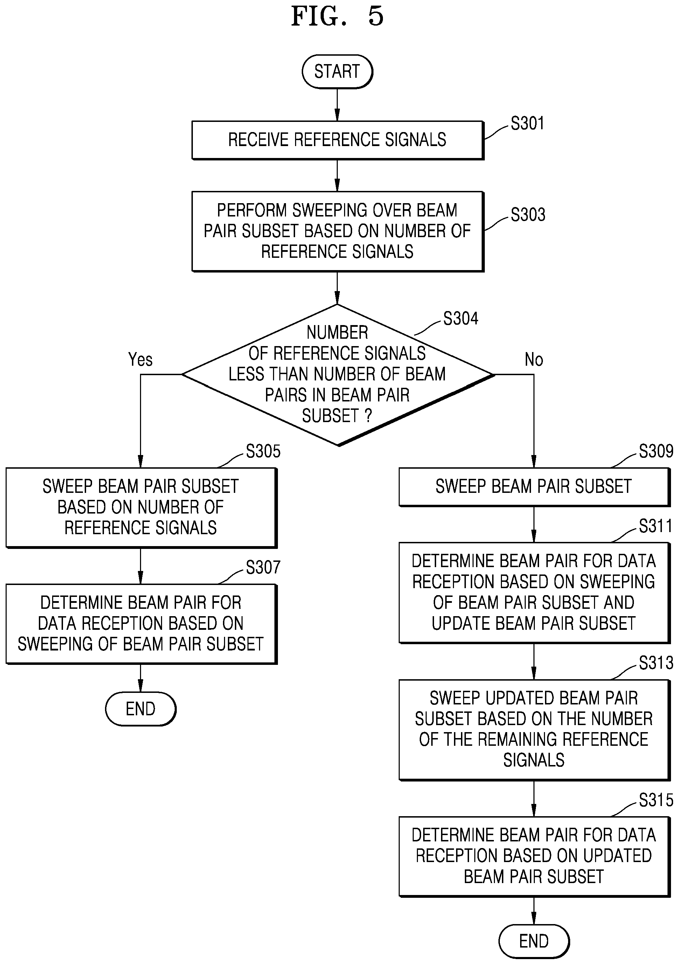

FIG. 5 illustrates an operation procedure of a wireless communication device, according to embodiments. The operation procedure of FIG. 5 will be described in conjunction with FIGS. 1 and 3A.

Referring to FIG. 5, in operation S301, the wireless communication device 100 may receive reference signals. For example, the wireless communication device 100 may receive the reference signals from the BS 900. Here, the reference signals may refer to signals for beam management. For example, the reference signals may include a synchronization signal block (SSB) and/or a channel status information-reference signal (CSI-RS).

In operation S303, the wireless communication device 100 may perform sweeping over a beam pair subset based on the number of reference signals.

In operation S304 and S305, when the number of reference signals is less than the number of beam pairs in the beam pair subset, the wireless communication device 100 may sweep the beam pair subset according to the number of reference signals. That is, the wireless communication device 100 may sweep a same number of beam pairs in the beam pair subset (or a similar number of beam pairs in the beam pair subset) as the number of reference signals. In operation S307, the wireless communication device 100 may determine a beam pair for data reception based on the sweeping of the beam pair subset. In detail, the wireless communication device 100 may measure received powers of the reference signals by sweeping a same number of beam pairs (or a similar number of beam pairs) as the reference signals, and determine a beam pair for data reception by using the measured received powers. The wireless communication device 100 may receive data by using the determined beam pair. Furthermore, when further receiving reference signals, the wireless communication device 100 may sweep unswept beam pairs in the beam pair subset.

In operation S304 and S309, when the number of reference signals is greater than or equal to the number of beam pairs in the beam pair subset, the wireless communication device 100 may sweep the beam pair subset. In detail, the wireless communication device 100 may sweep all beam pairs in the beam pair subset. In operation S311, the wireless communication device 100 may determine a beam pair for data reception based on the sweeping of the beam pair subset and update the beam pair subset. In detail, the wireless communication device 100 may measure received powers of reference signals by sweeping all beam pairs in the beam pair subset, and determine a beam pair for data reception by using the measured received powers. In addition, the wireless communication device 100 may update the beam pair subset by using the measured received powers. When the number of reference signals received by the wireless communication device 100 is N times greater than the number of beam pairs in the beam pair subset (where N is an integer greater than or equal to 2), the wireless communication device 100 may update the beam pair subset N times.

In operation S313, the wireless communication device 100 may sweep the updated beam pair subset based on a number of remaining reference signals (e.g., a number of reference signals exceeding the number of beam pairs in the beam pair subset). The wireless communication device 100 may update again the updated beam pair subset based on the number of remaining reference signals (e.g., with respect to the sweep performed in operation S313). In this case, the number of remaining reference signals is less than the number of beam pairs in the beam pair subset.

In operation S315, the wireless communication device 100 may determine a beam pair for data reception based on sweeping of the updated beam pair subset.

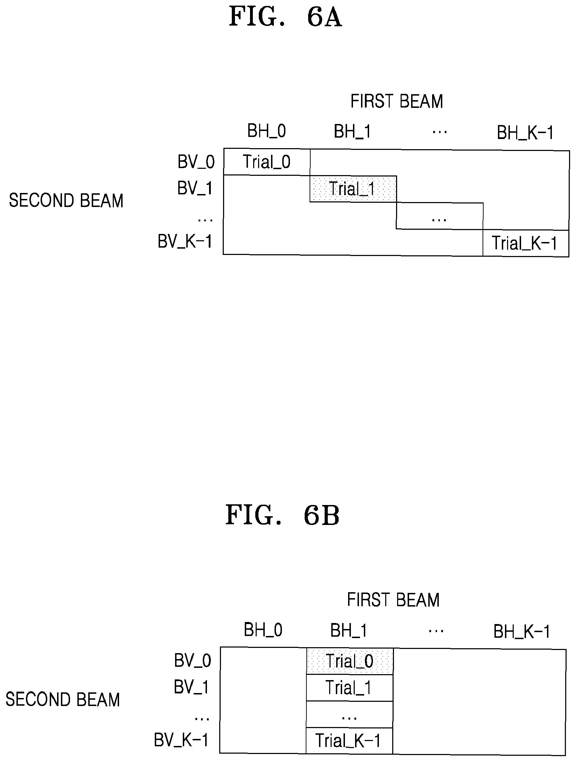

FIGS. 6A to 6C illustrate a method of updating a beam pair subset by fixing one polarization, according to embodiments. The method of FIGS. 6A to 6C will be described in conjunction with FIG. 1.

The wireless communication device 100 may initialize a beam pair subset. FIG. 6A illustrates an initial beam pair subset.

The wireless communication device 100 may receive reference signals based on sweeping of the initial beam pair subset. In this case, the beam pair subset may include beam pairs (BV_0, BH_0), (BV_1, BH_1),... and (BV_K-1, BH_K-1). In the inventive concepts, a first Rx beam may use index j(BHJ), and a second Rx beam may use index i(BV_i).

The wireless communication device 100 may measure first received powers of the reference signals received via first Rx beams and second received powers of the reference signals received via second Rx beams. The wireless communication device 100 may determine a first Rx beam corresponding to a largest first received power. For example, the wireless communication device 100 may determine a first Rx beam, having a horizontal polarization, corresponding to a largest first received power based on Equation 1 below.

[Equation 1]

$$i_H^{opt}, j_H^{opt} = \underset{\{i,j\} \in \mathcal{B}_{Init}}{\arg\max} \text{RSRP}_{H,i,j}$$

In Equation 1, $\text{RSRP}_{H,i,j}$ represents a first received power at the first antenna array 20, i represents an index of a second Rx beam, j represents an index of a first Rx beam, $\mathcal{B}_{Init}$ denotes an initial beam pair subset, and $j_H^{opt}$ denotes an index of a first Rx beam having a largest first received power. In Fig. 6A, $j_H^{opt}=1$. In other words, the first Rx beam with the largest first received power is BH_1. $i_H^{opt}$ denotes an index of a second Rx beam that forms a beam pair with the first Rx beam with the largest first received power. The wireless communication device 100 may update the beam pair subset with beam pairs formed between the first Rx beam BH_1 having the largest first received power and each of the second Rx beams BV_0 to BV_K-1. That is, the wireless communication device 100 may perform a polarization-fixed update by keeping the first Rx beam fixed. The updated beam pair subset may be expressed via Equation 2 below.

[Equation 2]

$$\mathcal{B}_V = \left\{ \{0, j_H^{opt}\}, \{1, j_H^{opt}\}, ..., \{K-1, j_H^{opt}\} \right\}$$

In Equation 2, $\mathcal{B}_V$ represents a beam pair subset in which a first Rx beam is fixed in beam pairs. In {x,y}, x denotes an index of a second Rx beam, and y denotes an index of a first Rx beam.

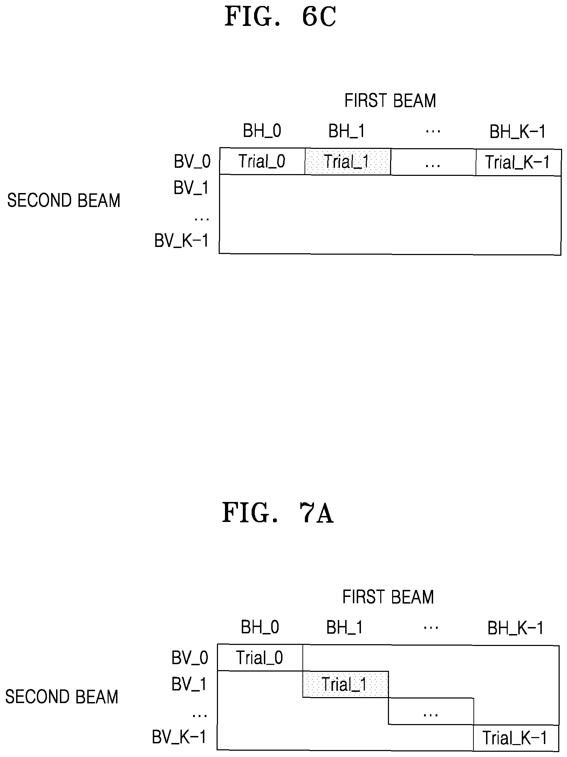

FIG. 6B illustrates a beam pair subset including beam pairs consisting of the first Rx beam BH_1 and each of the second Rx beams BV_0 to BV_K-1. The wireless communication device 100 may update the beam pair subset of FIG. 6B to a beam pair subset of FIG. 6C. The wireless communication device 100 may measure a first received power and a second received power for each reference signal by sweeping the beam pair subset. Referring to FIG. 6B, the wireless communication device 100 may determine a second Rx beam BV_0 as having a largest second received power. For example, the wireless communication device 100 may determine the second Rx beam BV_0 having the largest second received power based on Equation 3 below.

[Equation 3]

$$i_V^{opt}, j_H^{opt} = \underset{\{i, j_H^{opt}\} \in \mathcal{B}_V}{\arg\max} \text{RSRP}_{V,i,j_H^{opt}}$$

In Equation 3, $\text{RSRP}_{V,i,j}$ represents a second received power at the second antenna array 30, i is an index of a second Rx beam, j is an index of a first Rx beam, $\mathcal{B}_V$ represents a beam pair subset in which a first Rx beam is fixed in beam pairs, and $i_V^{opt}$ represents an index of a second Rx beam having a largest second received power. In Fig. 6B, $i_V^{opt} = 0$. The wireless communication device 100 may update the beam pair subset to include beam pairs consisting of the second Rx beam BV_0 and each of the first Rx beams BH_0 to BH_K-1. That is, the wireless communication device 100 may perform a polarization-fixed update by keeping the second Rx beam BV_0 fixed. The updated beam pair subset may be expressed via Equation 4 below.

[Equation 4]

$$\mathcal{B}_H = \left\{ \{i_V^{opt}, 0\}, \{i_V^{opt}, 1\}, ..., \{i_V^{opt}, K-1\} \right\}$$

FIG. 6C illustrates a beam pair subset including beam pairs consisting of the second Rx beam BV_0 and each of the first Rx beams BH_0 to BH_K-1.

The wireless communication device 100 may alternately repeat a first polarization-fixed update for keeping a first Rx beam having a largest first received power fixed and a second polarization-fixed update for keeping a second Rx beam having a largest second received power fixed. That is, when the first polarization-fixed update is performed on the beam pair subset, the second polarization-fixed update is subsequently performed as a next update on the beam pair subset. In addition, when the second polarization-fixed update is performed on the beam pair subset, the first polarization-fixed update is then performed as the next update to the beam pair subset. The wireless communication device 100 may reduce training overhead by alternately performing the first polarization-fixed update and the second polarization-fixed update.

According to embodiments, the wireless communication device 100 may perform a beam pair subset update on the initial beam pair subset by first keeping a second Rx beam fixed. The order of indices that the wireless communication device 100 uses when performing sweeping over a beam pair subset may vary. Even when the number of codewords in the codebook for the first antenna array 20 and the number of codewords in the codebook for the second antenna array 30 both are not equal to K, embodiments are applicable.

FIGS. 7A to 7C illustrate a method of updating a beam pair subset regardless of polarization, according to embodiments.

Referring to FIG. 7A, the wireless communication device 100 may initialize a beam pair subset. FIG. 7A illustrates an initial beam pair subset. The wireless communication device 100 may update the initial beam pair subset, based on a beam having a largest received power among first Rx beams and second Rx beams regardless of polarization.

The wireless communication device 100 may receive reference signals based on sweeping of the initial beam pair subset. In this case, the beam pair subset may include beam pairs (BV_0, BH_0), (BV_1, BH_1),... and (BV_K-1, BH_K-1). The wireless communication device 100 may measure first received powers of the reference signals received via first Rx beams and second received powers of the reference signals received via second Rx beams.

The wireless communication device 100 may determine a beam having a largest first or second received power. For example, the wireless communication device 100 may select one of a "first Rx beam and a second Rx beam" corresponding to a largest received power among "first received powers and second received powers", based on Equation 5 below.

[Equation 5]

$$P^{opt}, i_{P^{opt}}^{opt}, j_{P^{opt}}^{opt} = \frac{\arg\max}{P \in \{H,V\}, \{i,j\} \in \mathcal{B}_{Init}} \text{RSRP}_{P,i,j}$$

In Equation 5, P denotes the union of first Rx beams and second Rx beams, i represents an index of a second Rx beam, and j represents an index of a first Rx beam.

When the selected Rx beam is the first Rx beam, the wireless communication device 100 may perform a first polarization-independent update on the beam pair subset to include beam pair combinations between the selected first Rx beam and each of the second Rx beams. In addition, when the selected Rx beam is the second Rx beam, the wireless communication device 100 may perform a second polarization-independent update on the beam pair subset to include beam pair combinations between the selected second Rx beam and each of the first Rx beams. The first and second polarization-independent updates may be expressed via Equation 6 below.

[Equation 6]

$$\mathcal{B} = \left\{ \{i_V^{opt}, 0\}, \{i_V^{opt}, 1\}, ..., \{i_V^{opt}, K-1\} \right\}, \quad \text{if } P^{opt} = V$$
$$\mathcal{B} = \left\{ \{0, j_H^{opt}\}, \{1, j_H^{opt}\}, ..., \{K-1, j_H^{opt}\} \right\}, \quad \text{else}$$

Referring to Equation 6, when a beam having a largest received power is a j-th first Rx beam $j_{P^{opt}}^{opt}$, the beam pair subset may be updated to include beam pairs consisting of the j-th first Rx beam $j_{P^{opt}}^{opt}$ and each of the second Rx beams BV_0 to BV_K-1. This update may be referred to as a first polarization independent update. When the beam having a largest received power is an i-th second Rx beam $i_{P^{opt}}^{opt}$ , the beam pair subset may be updated to include beam pairs consisting of the i-th second Rx beam $i_{P^{opt}}^{opt}$ and each of the first Rx beams BH_0 to BH_K-1. This update may be referred to as a second polarization independent update.

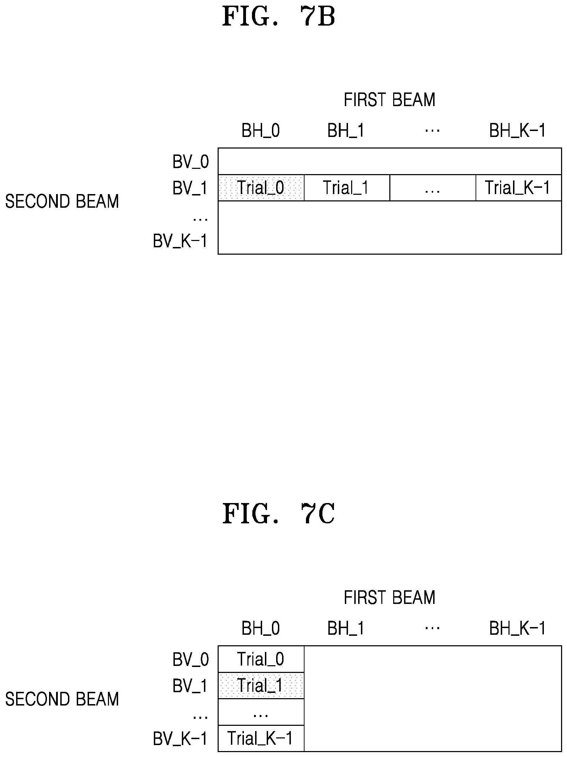

Referring to FIG. 7A, when a second received power for the second Rx beam BV_1 is largest among the first Rx beams and the second Rx beams, the wireless communication device 100 may select the second Rx beam BV_1. The wireless communication device 100 may update the beam pair subset to include beam pairs consisting of the second Rx beam BV_1 and each of the first Rx beams BH_0 to BH_K-1. FIG. 7B illustrates a beam pair subset updated to include beam pairs consisting of the second Rx beam BV_1 and each of the first Rx beams BH_0 to BH_K-1.

The wireless communication device 100 may measure first received powers of reference signals received via first Rx beams in the updated beam pair subset and second received powers of the reference signals received via second Rx beams in the updated beam pair subset. In FIG. 7B, when a first received power for the first Rx beam BH_0 is largest among the first Rx beams and the second Rx beams, the wireless communication device 100 may update again the updated beam pair subset to include the beam pairs consisting of the first Rx beam BH_0 and each of the second Rx beams BV_0 through BV_K-1. The wireless communication device 100 may repeat the above-described procedures. FIG. 7C illustrates a beam pair subset obtained by updating again the updated beam pair subset.

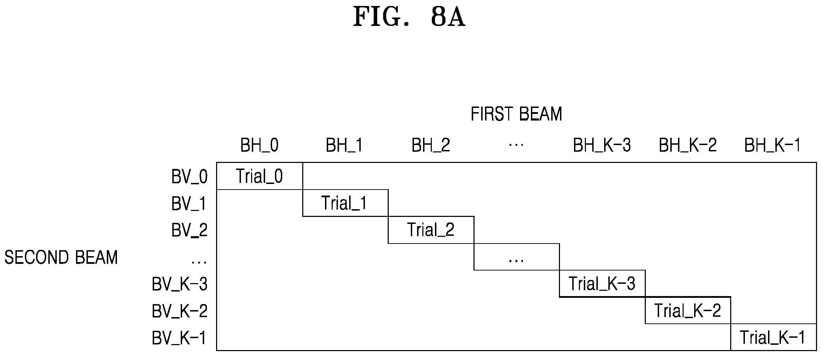

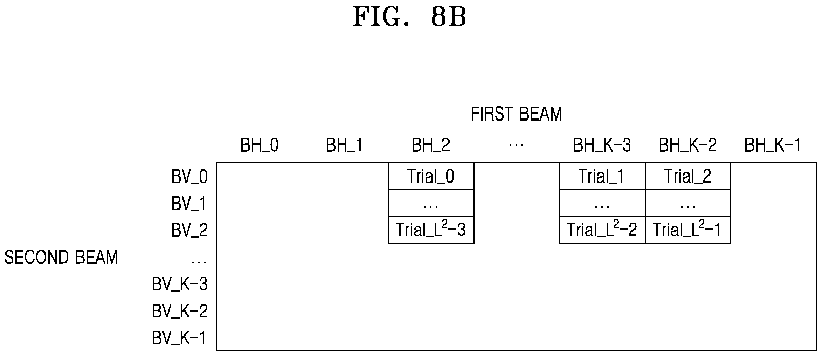

FIGS. 8A and 8B illustrate a method of updating a beam pair subset by selecting a plurality of beams based on received powers for each polarization, according to embodiments.

Referring to FIG. 8A, the wireless communication device 100 may initialize a beam pair subset. FIG. 8A illustrates an initial beam pair subset.

The wireless communication device 100 may receive reference signals based on sweeping of the initial beam pair subset. The wireless communication device 100 may measure first received powers of the reference signals received via first Rx beams and second received powers of the reference signals received via second Rx beams.

The wireless communication device 100 may select, from among the first Rx beams, L first Rx beams (L is an integer greater than or equal to 1) corresponding to first received powers in a descending order. Then, the wireless communication device 100 may select, from among the second Rx beams, L second Rx beams having second received powers in a descending order.

The selected first Rx beams are expressed via Equation 7 below.

[Equation 7]

$$\mathcal{B}_{H,L} = \left\{ j_{H,1}^{opt}, j_{H,2}^{opt}, \dots, j_{H,L}^{opt} \right\}$$

The selected second Rx beams are expressed via Equation 8 below.

[Equation 8]

$$\mathcal{B}_{V,L} = \left\{ i_{V,1}^{opt}, i_{V,2}^{opt}, \dots, i_{V,L}^{opt} \right\}$$

A beam pair subset including the selected first Rx beams and the selected second Rx beams may be expressed via Equation 9 below.

[Equation 9]

$$\mathcal{B} = \left\{ i, j | i \in \mathcal{B}_{V,L}, j \in \mathcal{B}_{H,L} \right\}$$

The wireless communication device 100 may measure received powers of the reference signals by using beam pairs in the beam pair subset, and repeat the above-described procedures.

Unlike in the above-described example, the wireless communication device 100 may select, from among the first Rx beams, M first Rx beams (M is an integer greater than or equal to 1) having first received powers in a descending order, and select, from among the second Rx beams, N second Rx beams (N is an integer greater than or equal to 1) having second received powers in a descending order. The wireless communication device 100 may update the beam pair subset to include the selected beam pairs. M and N may be different from each other or may be equal to each other.

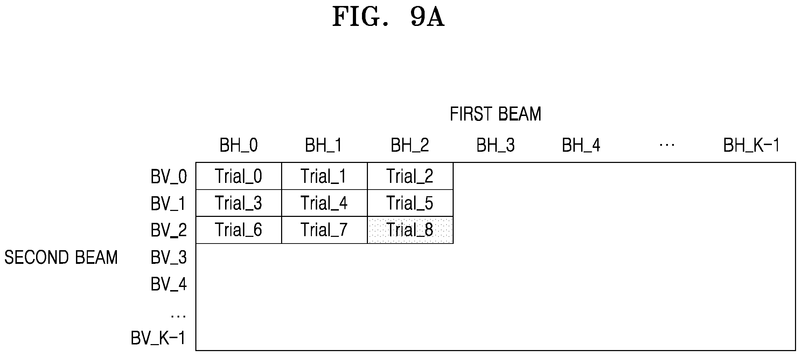

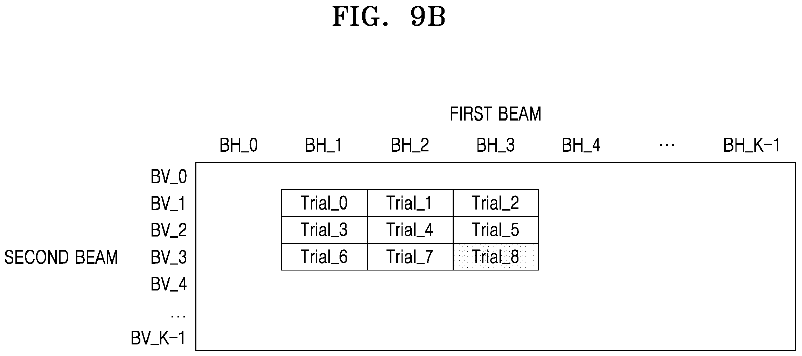

FIGS. 9A and 9B illustrate a method of updating a beam pair subset, according to embodiments. The method of FIGS. 9A and 9B will be described in conjunction with FIG. 1.

Referring to FIG. 9A, the wireless communication device 100 may initialize a beam pair subset. FIG. 9A illustrates an initial beam pair subset. The initial beam pair subset is a window

(e.g., an index-based window pattern) having a size of $N_V \times N_H$. Nv is the number of second Rx beams in the window. $N_H$ is the number of first Rx beams in the window. Nv and $N_H$ may vary depending on an implementation. The wireless communication device 100 may measure first received powers and second received powers of reference signals based on the initial beam pair subset. The wireless communication device 100 may update the beam pair subset by moving the window based on an index of a beam pair with a largest sum of a first received power and a second received power within the window.

The initial beam pair subset may be expressed via Equation 10.

[Equation 10]

$$\mathcal{B}_{\text{window}} = \left\{ \{i_0, j_0\}, \{i_1, j_1\}, \dots, \{i_{N_V-1}, j_{N_H-1}\} \right\}$$

The wireless communication device 100 may determine a beam pair having a largest sum of a first received power and a second received power based on Equation 11 below.

[Equation 11]

$$i^{opt}, j^{opt} = \underset{\{i,j\} \in \mathcal{B}_{\text{window}}}{\arg \max} \ \text{RSRP}_{H,i,j} + \text{RSRP}_{V,i,j}$$

In Equation 11, $i^{opt}$ is an index of a second Rx beam in a beam pair having a largest sum of a first received power and a second received power and $j^{opt}$ is an index of a first Rx beam in the beam pair having the largest sum of the first received power and the second received power.

The wireless communication device 100 may move the window based on a relationship between the beam pair with the largest sum of the first received power and the second received power and a center (e.g., midpoint) of the window. The wireless communication device 100 may move the window as shown in Equation 12 below.

[Equation 12]

$$\mathcal{B}_{\text{window}} = \mathcal{B}_{\text{window}} + \left\{ C_V \left( i^{opt} - i_{\left\lceil \frac{N_v-1}{2} \right\rceil} \right), C_H \left( j^{opt} - j_{\left\lceil \frac{N_H-1}{2} \right\rceil} \right) \right\}$$

In Equation 12, Cv and $C_H$ respectively denote weights for determining the degree of movement of the window, Nv is the number of second Rx beams, and $N_H$ is the number of first Rx beams. According to embodiments, for example, the wireless communication device 100 may move the window such that the beam pair with the largest sum of the first received power and the second received power defines the center of the moved window.

In response to reception of the reference signals, the wireless communication device 100 may determine a beam pair with the largest received power in the beam pair subset, and repeat an operation of moving the window.

Referring to FIGS. 9A and 9B, FIG. 9B illustrates a beam pair subset obtained by updating the initial beam pair subset of FIG. 9A when $i^{opt}=2$, $j^{opt}=2$, Cv=1, and $C_H=1$. According to embodiments, for example, the wireless communication device 100 may move the window such that the beam pair with the largest sum of the first received power and the second received power defines the center of the moved window. With reference to FIG. 9B, the reference signals may be received with respect to the moved window, and the wireless communication device 100 may determine that $i^{opt}=3$ and $j^{opt}=3$.

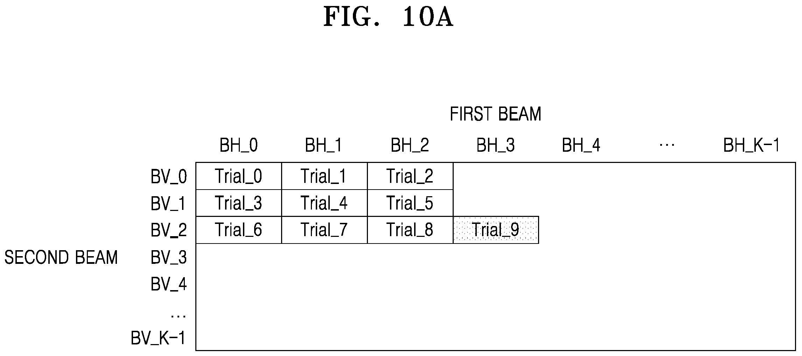

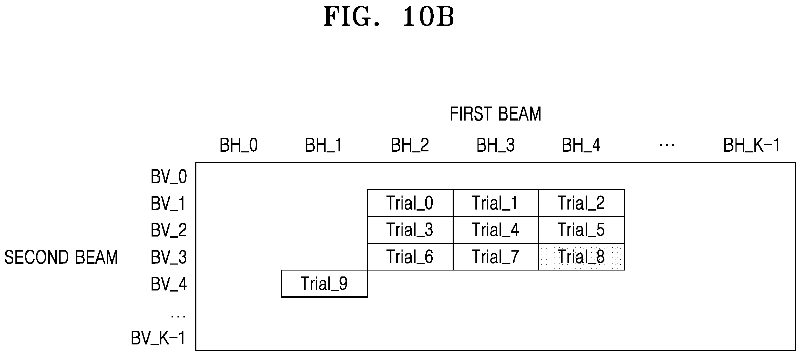

FIGS.10A and 10B illustrate a method of updating a beam pair subset, according to embodiments.

Referring to FIG. 10A, the wireless communication device 100 may initialize a beam pair subset. FIG. 10A illustrates an initial beam pair subset. The initial beam pair subset includes a window (e.g., an index-based window pattern) having a size of $N_V \times N_H$ and an arbitrary beam pair (e.g., a third beam pair). Nv is the number of second Rx beams in the window. $N_H$ is the number of first Rx beams in the window. Nv and $N_H$ may vary depending on an implementation. According to embodiments, the arbitrary beam pair may not be among the beam pairs of the window. The wireless communication device 100 may measure first received powers and second received powers of reference signals based on the initial beam pair subset. The wireless communication device 100 may update the beam pair subset by moving the window based on an index of a beam pair with a largest sum of a first received power and a second received power within the window.

The initial beam pair subset may be expressed via Equation 13 below.

[Equation 13]

$$\mathcal{B}_{\text{window}} = \left\{ \{i_0, j_0\}, \{i_1, j_1\}, \dots, \{i_{N_V-1}, j_{N_H-1}\}, \{i_{N_V}, j_{N_H}\} \right\}$$

In Equation 13, the initial beam pair subset includes beam pairs corresponding to a window and an arbitrary beam pair $\{i_{N_V}, j_{N_H}\}$.

The wireless communication device 100 may determine a beam pair having a largest sum of a first received power and a second received power based on Equation 14 below.

[Equation 14]

$$i^{opt}, j^{opt} = \underset{\{i,j\} \in \mathcal{B}_{\text{window}}}{\arg \max} \ \text{RSRP}_{H,i,j} + \text{RSRP}_{V,i,j}$$

In Equation 14, $i^{opt}$ is an index of a second Rx beam in a beam pair having a largest sum of a first received power and a second received power, and $j^{opt}$ is an index of a first Rx beam in the beam pair having the largest sum of the first received power and the second received power.

The wireless communication device 100 may move the window based on a relationship between the beam pair with the largest sum of the first received power and the second received power and a midpoint of the window. According to embodiments, the wireless communication device 100 may move the window based on a relationship between the beam pair with the largest sum of the first received power and the second received power, and a midpoint of the window and the arbitrary beam pair. For example, the wireless communication device 100 may move the window based on Equation 15 below.

[Equation 15]

$$\mathcal{B}_{\text{window}} = \mathcal{B}_{\text{window}} + \left\{ C_V \left( i^{opt} - i_{\left\lceil \frac{N_v-1}{2} \right\rceil} \right), C_H \left( j^{opt} - j_{\left\lceil \frac{N_H-1}{2} \right\rceil} \right) \right\}$$

In Equation 15, Cv and $C_H$ respectively denote weights for determining the degree of movement of the window, Nv is the number of second Rx beams, and $N_H$ is the number of first Rx beams.

In response to reception of the reference signals, the wireless communication device 100 may determine a beam pair with the largest received power in the beam pair subset, and repeat an operation of moving the window.

Referring to FIGS. 10A and 10B, FIG. 10B illustrates a beam pair subset obtained by updating the initial beam pair subset of FIG. 10A when $i^{opt}=2$, $j^{opt}=3$, Cv=1, and $C_H=1$. According to embodiments, for example, the wireless communication device 100 may move the window such that the beam pair with the largest sum of the first received power and the second received power defines the center of the moved window, and the arbitrary beam pair may be determine, e.g., at random. With reference to FIG. 10B, the reference signals may be received with respect to the moved window and determined arbitrary beam pair, and the wireless communication device 100 may determine that $i^{opt}=3$ and $j^{opt}=4$.

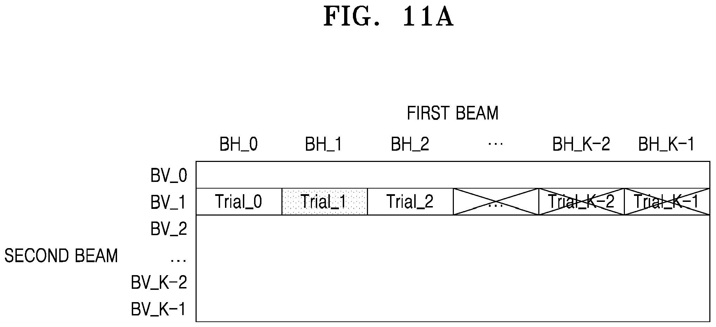

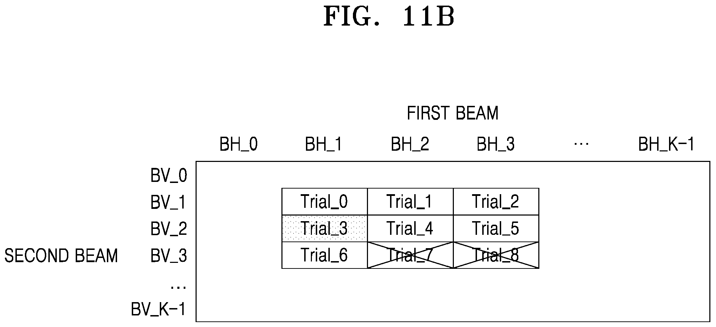

FIGS. 11A and 11B illustrate a method of stopping beam sweeping, according to embodiments. The method of FIGS. 11A and 11B will be described in conjunction with FIG. 1.

The wireless communication device 100 may measure first received powers and second received powers of reference signals by using beam pairs in a beam pair subset. The wireless communication device 100 may determine an optimal (e.g., high-quality) beam pair based on measurement results. When a relationship between beam pairs in the beam pair subset and received powers of the reference signals is concave, the wireless communication device 100 may omit unnecessary measurement (e.g., some measurements) of a received power.

For example, the wireless communication device 100 may stop beam sweeping by considering only a beam of a particular polarization. In detail, when a first received power increases and then decreases according to sweeping of the beam pair subset by the wireless communication device 100, the wireless communication device 100 may stop measuring (e.g., terminate, omit and/or skip a beam sweeping operation without sweeping remaining beams in the beam pair subset) first received powers for first Rx beams. In another example, when a second received power increases and then decreases according to sweeping of the beam pair subset by the wireless communication device 100, the wireless communication device 100 may stop measuring (e.g., terminate, omit and/or skip a beam sweeping operation without sweeping remaining beams in the beam pair subset) second received powers for second Rx beams. According to embodiments, a measurement order of the first received powers and/or the second received powers may be based on an order of the beam sweeping with respect to the first Rx beams and the second Rx beams, respectively.

For example, the wireless communication device 100 may stop beam sweeping by considering both a first Rx beam and a second Rx beam. When both the first received power and the second received power increase and then decrease according to sweeping of the beam pair subset by the wireless communication device 100, the wireless communication device 100 may stop measuring (e.g., terminate, omit and/or skip a beam sweeping operation without sweeping remaining beams in the beam pair subset) first received powers and second received powers.

For example, referring to FIG. 11A, the wireless communication device 100 first measures a first received power and a second received power for a beam pair (BH_0, BV_1) (Trial_0). Next, the wireless communication device 100 measures a first received power and a second received power for a beam pair (BH_1, BV_1) (Trial_1). Next, the wireless communication device 100 measures a first received power and a second received power for a beam pair (BH_2, BV_1) (Trial_2). When the sum of the first received power and the second received power is greater in Trial_1 than in Trial_0 and less in Trail_2 than in Trial_1 (e.g., in response to a corresponding determination by the wireless communication device 100), the wireless communication device 100 may not measure (e.g., may stop measurement of) received powers for subsequent beam pairs.

For example, referring to FIG. 11B, the wireless communication device 100 first measures a first received power and a second received power for a beam pair (BH_1, BV_1) (Trial_0). Next, the wireless communication device 100 measures a first received power and a second received power of a beam pair (BH_2, BV_1) (Trial_1). In this way, the wireless communication device 100 measures first received powers and second received powers up to Trial_5 and Trail_6. When a first received power for a first Rx beam is less in Trial_4 than in Trial_3, and a second received power for a second Rx beam is greater in Trial_3 than in Trial_0, and less in Trial_6 than in Trial_3 (e.g., in response to a corresponding determination by the wireless communication device 100), the wireless communication device 100 may not measure (e.g., may stop measurement of) received powers for the remaining beam pairs. That is, when both the first received power and the second received power increase and then decrease, the wireless communication device 100 may stop beam sweeping. In detail, when the first received power and the second received power each increase and then decrease, the wireless communication device 100 may check a measured received power that decreases afterward and stop measuring received powers for beam pairs for which received powers have not been measured yet.

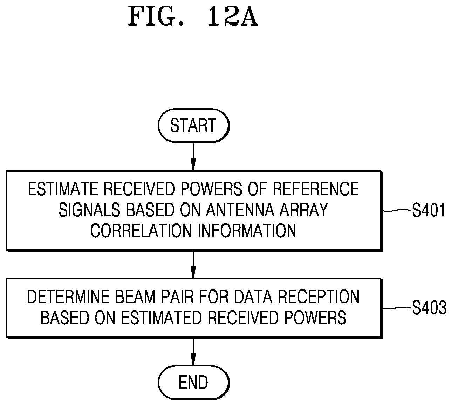

FIG. 12A illustrates an operation procedure of a wireless communication device, according to embodiments. The operation procedure of FIG. 12A will be described in conjunction with FIG. 1.

In a case where there is no correlation between antenna arrays having different polarization characteristics, RSRPs for all beam pairs may be estimated after sweeping an initial beam pair subset including beam pairs that each include a first Rx beam and a second Rx beam with a same (e.g., common) index. However, because there is a correlation between the first antenna array 20 and the second antenna array 30, conventional device would experience difficulty attempting to estimate RSRPs for unmeasured beam pairs as in the above-mentioned case. However, the wireless communication device 100 according to the inventive concepts may overcome these deficiencies of conventional devices by estimating RSRPs for beam pairs for which RSRPs are not directly measured using information about the correlation between the first antenna array 20 and the second antenna array 30.

Referring to FIG. 12A, in operation S401, the wireless communication device 100 may estimate RSRPs based on antenna array correlation information. For example, the wireless communication device 100 may estimate RSRPs for beam pairs for which RSRPs are not directly measured by using cross polarization discrimination (XPD). The XPD includes first XPD and second XPD.

The first XPD may include a ratio of a gain of a first Rx beam corresponding to a largest value among first received powers to a gain of a second Rx beam. The first XPD may be expressed via Equation 16 below.

[Equation 16]

$$XPD_{H,i,j} = \frac{G_{H,j}(H,j)}{G_{V,i}(H,j)}$$

In Equation 16, $XPD_{(H,i,j)}$ represents first XPD, $G_{H,j}(H,j)$ is a highest gain when the first antenna array 20 uses a j-th first Rx beam, and $G_{V,i}(H,j)$ is a gain when the second antenna array 30 uses an i-th second Rx beam.

The second XPD may include a ratio of a gain of a second Rx beam corresponding to a largest value among second received powers to a gain of a first Rx beam. The second XPD may be expressed via Equation 17 below.

[Equation 17]

$$XPD_{V,i,j} = \frac{G_{V,i}(V,i)}{G_{H,j}(V,i)}$$

In Equation 17, $XPD_{(V,i,j)}$ represents second XPD, $G_{V,i}(V,i)$ is a highest gain when the second antenna array 30 uses the i-th second Rx beam, and $G_{H,j}(V,i)$ is a gain when the first antenna array 20 uses the j-th first Rx beam.

The wireless communication device 100 may estimate RSRPs based on Equations 18 and 19 below.

[Equation 18]

$$\begin{bmatrix} \overline{RSRP}_{H,i} \\ \overline{RSRP}_{V,i} \end{bmatrix} \approx \begin{bmatrix} 1 & \dfrac{1}{XPD_{V,i,i}} \\ \dfrac{1}{XPD_{H,i,i}} & 1 \end{bmatrix}^{-1} \begin{bmatrix} RSRP_{H,i,i} \\ RSRP_{V,i,i} \end{bmatrix}$$

[Equation 19]

$$\begin{bmatrix} \widetilde{RSRP}_{H,i,j} \\ \widetilde{RSRP}_{V,i,j} \end{bmatrix} \approx \begin{bmatrix} 1 & \dfrac{1}{XPD_{V,i,j}} \\ \dfrac{1}{XPD_{H,i,j}} & 1 \end{bmatrix} \begin{bmatrix} \overline{RSRP}_{H,j} \\ \overline{RSRP}_{V,i} \end{bmatrix}$$

In Equations 18 and 19, $RSRP_{H,i,i}$ is RSRP at the first antenna array 20, which is measured by the wireless communication device 100 when using an i-th first Rx beam and an i-th second Rx beam. $RSRP_{V,i,i}$ is RSRP at the second antenna array 30, which is measured when using the i-th first Rx beam and the i-th second Rx beam.

$$XPD_{H,i,j} = \frac{G_{H,j}(H,j)}{G_{V,i}(H,j)}$$ is a ratio of a received signal at the first antenna array 20 when the wireless communication device 100 uses the j-th first Rx beam and the i-th second Rx beam.

$$XPD_{V,i,j} = \frac{G_{V,i}(V,i)}{G_{H,j}(V,i)}$$ is a ratio of a received signal at the second antenna array 30 when the wireless communication device 100 uses the j-th first Rx beam and the i-th second Rx beam. $\overline{RSRP}_{H,i}$ is RSRP at the first antenna array 20 estimated when the wireless communication device 100 uses only the i-th first Rx beam. $\overline{RSRP}_{V,i}$ is RSRP at the second antenna array 30 estimated when the wireless communication device 100 uses only the i-th second Rx beam. $\widetilde{RSRP}_{H,i,j}$ is RSRP at the first antenna array 20, which is estimated when the wireless communication device 100 uses the j-th first Rx beam and the i-th second Rx beam. $\widetilde{RSRP}_{V,i,j}$ is RSRP at the second antenna array 30 estimated when the wireless communication device 100 uses the j-th first Rx beam and the i-th second Rx beam.

In operation S403, the wireless communication device 100 may determine a beam pair for data reception based on the estimated received powers.

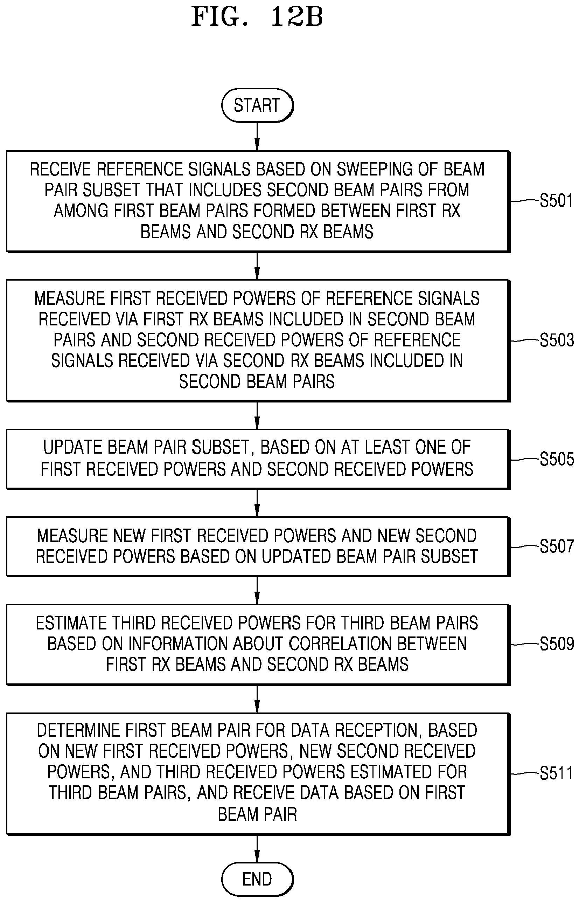

FIG. 12B illustrates an operation procedure of a wireless communication device, according to embodiments.

Referring to FIG. 12B, in operation S501, the wireless communication device 100 may receive reference signals based on sweeping of a beam pair subset that includes second beam pairs from among first beam pairs formed between first Rx beams and second Rx beams.

In operation S503, the wireless communication device 100 may measure first received powers of the reference signals received via first Rx beams included in the second beam pairs and second received powers of the reference signals received via second Rx beams included in the second beam pairs.

In operation S505, the wireless communication device 100 may update the beam pair subset, based on at least one of the first received powers and the second received powers.

In operation S507, the wireless communication device 100 may measure new first received powers and new second received powers based on the updated beam pair subset. According to embodiments, when both a first received power and a second received power increase and then decrease according to sweeping, the wireless communication device 100 may stop measuring first received powers and second received powers. In other words, the wireless communication device 100 may stop sweeping of beam pairs for which received powers have not been measured.

In operation S509, the wireless communication device 100 may estimate third received powers for third beam pairs based on information about a correlation between the first Rx beams and the second Rx beams.

In operation S511, the wireless communication device 100 may determine a first beam pair for data reception, based on the new first received powers, the new second received powers, and the third received powers estimated for the third beam pairs, and receive data based on the first beam pair. The third beam pairs may include a beam pair for which the wireless communication device 100 has not directly measured a received power of a reference signal. A third received power may be the sum of a received power of a reference signal received via a first Rx beam in the third beam pairs and a received power of the reference signal received via a second Rx beam in the third beam pairs. According to embodiments, for example, each third received power may be the sum of a received power of a reference signal received via a first Rx beam in a respective third beam pair among the third beam pairs and a received power of the reference signal received via a second Rx beam in the respective third beam pair among the third beam pairs. The wireless communication device 100 may determine a beam pair having a largest value among "a sum of a new first received power and a new second received power" and the third received powers as being the first beam pair for data reception.

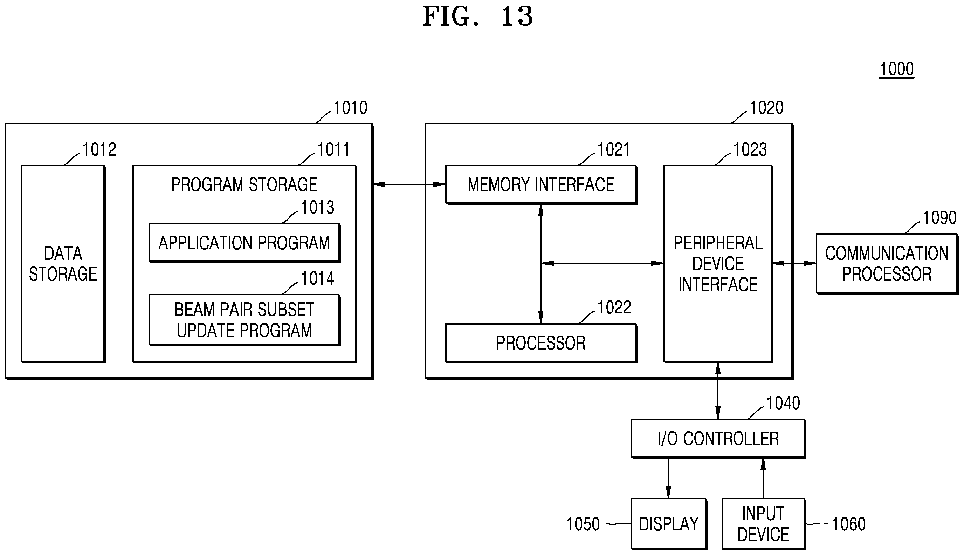

FIG. 13 is a block diagram of an electronic device according to embodiments.

Referring to FIG. 13, an electronic device 1000 may include a memory 1010, a processor unit 1020, an input/output (I/O) controller 1040, a display 1050, an input device 1060, and/or a communication processor 1090. In this case, the memory 1010 may be configured as a plurality of memories. Configurations and functions of the components are now described.

The memory 1010 may include a program storage 1011 for storing programs for controlling an operation of the electronic device 1000 and a data storage 1012 for storing data generated during program execution. The data storage 1012 may store data for operations of an application program 1013 and/or a beam pair subset update program 1014. The program storage 1011 may include the application program 1013 and the beam pair subset update program 1014. Here, the programs included in the program storage 1011 may be sets of instructions and may be expressed as instruction sets.

The application program 1013 may include an application program that operates in the electronic device 1000. In other words, the application program 1013 may include instructions for an application run by a processor 1022. The beam pair subset update program 1014 may include instructions for updating a beam pair subset, according to embodiments.

The processor unit 1020 may include the processor 1022, a memory interface 1021 and/or a peripheral device interface 1023. The peripheral device interface 1023 may control a connection between peripheral devices including the I/O controller 1040 and the processor 1022 and/or the memory interface 1021. The processor 1022 may control the electronic device 1000 to provide services by using at least one software program. In this case, the processor 1022 may execute at least one program stored in the memory 1010 to provide a service corresponding to the program.

The I/O controller 1040 may provide an interface between I/O devices, such as the display 1050 and/or the input device 1060, and the peripheral device interface 1023. The display 1050 may display state information, input characters, moving pictures, still pictures, etc. For example, the display 1050 may display information about an application program executed by the processor 1022.

The input device 1060 may provide input data generated due to a selection by the electronic device 1000 to the processor unit 1020 via the I/O controller 1040. In this case, the input device 1060 may include a keypad including at least one hardware button, a touch pad for sensing touch information, etc. For example, the input device 1060 may provide the processor 1022 with the touch information, such as a touch, a touch movement, and a touch release that have been sensed by the touch pad, via the I/O controller 1040. The electronic device 1000 may include the communication processor 1090 that performs communication functions for voice communication and data communication.

Conventional devices and methods for selecting a combination of reception beams for use in wireless communications perform a search over all combinations of reception beams defined in codebooks for respective antenna arrays.

The search includes measuring powers of reference signals over all of the combinations of reception beams to select the combination of reception beams for the wireless communication. This search over all combinations of reception beams results in excessive resource consumption (e.g., processor, memory, power, etc.) and delay.

However, according to embodiments, improved devices and methods are provided for selecting a combination of reception beams for use in wireless communications. For example, the improved devices and methods may adaptively select beam sweeping candidates based on different polarizations of respective antenna arrays, thereby reducing a number of combinations of reception beams to be measured to a number fewer than the total number of combinations of reception beams defined in the codebooks for the respective antenna arrays. Accordingly, the improved devices and methods overcome the deficiencies of the conventional devices and methods to at least reduce resource consumption (e.g., processor, memory, power, etc.) and/or delay.

According to embodiments, operations described herein as being performed by the wireless communication device 100, the signal processor 110, the beam pair subset update module 10, the beamforming apparatus 200, the controller 210, the analog beamformer 220, the BS 900, the electronic device 1000, the processor unit 1020, the I/O controller 1040, the communication processor 1090, the processor 1022, the memory interface 1021, and/or the peripheral device interface 1023 may be performed by processing circuitry. The term 'processing circuitry,' as used in the present disclosure, may refer to, for example, hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

The various operations of methods described above may be performed by any suitable device capable of performing the operations, such as the processing circuitry discussed above. For example, as discussed above, the operations of methods described above may be performed by various hardware and/or software implemented in some form of hardware (e.g., processor, ASIC, etc.).

The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or operations of a method or algorithm and functions described in connection with embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium (e.g., the memory 1010). A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Embodiments have been set forth above in the drawings and the specification. Although embodiments have been described using specific terms in the present specification are not used to limit the meaning or the scope of the inventive concepts set forth in the claims. Therefore, those of ordinary skill in the art will understand that various changes in form and details may be made therein and equivalent other examples are possible therefrom. Accordingly, the true scope of the inventive concepts should be defined by the technical idea of the appended claims.

While the inventive concepts have been particularly shown and described with reference to embodiments thereof, it will be understood that various changes in form and details may be made therein without departing from the scope of the following claims.

**Claims**

**1.** An operation method of a wireless communication device, the operation method comprising:

receiving initial reference signals based on sweeping of a first beam pair subset, the initial reference signals including first reference signals received via first reception beams and second reference signals received via second reception beams, the first reception beams and the second reception beams being included in the first beam pair subset, and the first reception beams having a polarization different from that of a polarization of the second reception beams;

measuring first received powers of the first reference signals and second received powers of the second reference signals;

determining a first beam pair for receiving first data based on the first received powers and the second received powers;

updating the first beam pair subset based on at least one of the first received powers or the second received powers to obtain an updated beam pair subset;

determining a second beam pair for receiving second data based on received powers of new reference signals for the updated beam pair subset; and

receiving the second data based on the second beam pair.

2. The operation method of claim 1, wherein the first reception beams have a horizontal polarization; and the second reception beams have a vertical polarization.

3. The operation method of claim 1 or claim 2, wherein the updating of the first beam pair subset comprises one of:

performing a first polarization-fixed update on the first beam pair subset to include beam pair combinations between one of the first reception beams and each of the second reception beams, the one of the first reception beams corresponding to a largest first received power among the first received powers; or

performing a second polarization-fixed update on the first beam pair subset to include beam pair combinations between each of the first reception beams and one of the second reception beams, the one of the second reception beams corresponding to a largest second received power among the second received powers.

4. The operation method of claim 3, wherein

the updating of the first beam pair subset comprises the performing of the first polarization-fixed update on the first beam pair subset, and the method further comprises performing the second polarization-fixed update with respect to the updated beam pair subset; or

the updating of the first beam pair subset comprises the performing of the second polarization-fixed update on the first beam pair subset, and the method further comprises performing the first polarization-fixed update with respect to the updated beam pair subset.

5. The operation method of claim 1 or claim 2, wherein the updating of the first beam pair subset comprises:

selecting a selected reception beam from among the first reception beams and the second reception beams, the selected reception beam being one of the first reception beams corresponding to a largest received power among the first received powers or one of the second reception beams corresponding to a largest received power among the second received powers;

performing a first polarization-independent update on the first beam pair subset in response to the selected reception beam being the one of the first reception beams, the updated beam pair subset including beam pair combinations between the selected reception beam and each of the second reception beams based on the first polarization-independent update; and

performing a second polarization-independent update on the first beam pair subset in response to the selected reception beam being the one of the second reception beams, the updated beam pair subset including beam pair combinations between each of the first reception beams and the selected reception beam based on the second polarization-independent update.

6. The operation method of claim 1 or claim 2, wherein the updating of the first beam pair subset comprises updating the first beam pair subset such that the updated beam pair subset includes beam pair combinations between:

M first reception beams among the first reception beams corresponding to M first received powers in a descending order from among the first received powers; and

N second reception beams among the second reception beams corresponding to N second received powers in a descending order from among the second received powers, M and N each being an integer greater than or equal to 1.

7. The operation method of claim 6, wherein M is equal to N.

8. The operation method of claim 1 or claim 2, wherein

the first beam pair subset includes beam pairs of an index-based window pattern; and the updating of the first beam pair subset comprises:

selecting a third beam pair among the first beam pair subset having a largest sum of one of the first received powers and one of the second received powers, the third beam pair including one of the first reception beams and one of the second reception beams, the one of the first reception beams corresponding to the one of the first received powers, and the one of the second reception beams corresponding to the one of the second received powers, and

moving the index-based window pattern based on an index for a midpoint of the index-based window pattern and an index of the third beam pair.

9. The operation method of claim 1 or claim 2, wherein

the first beam pair subset includes beam pairs of an index-based window pattern and a fourth beam pair, the fourth beam pair not being among the beam pairs of the index-based window pattern; and
the updating of the first beam pair subset comprises:

selecting a fifth beam pair among the first beam pair subset having a largest sum of one of the first received powers and one of the second received powers, the fifth beam pair including one of the first reception beams and one of the second reception beams, the one of the first reception beams corresponding to the one of the first received powers, and the one of the second reception beams corresponding to the one of the second received powers, and
moving the index-based window pattern based on an index for a midpoint of the index-based window pattern and the fourth beam pair, and
an index of the fifth beam pair.

10. The operation method of any preceding claim, wherein the measuring comprises:

stopping the measuring of the first received powers in response to determining that respective first received powers among the first received powers corresponding to a portion of the first reference signals increase and then decrease according to a measurement order of the portion of the first reference signals, the measurement order of the portion of the first reference signals corresponding to the sweeping; and/or
stopping the measuring of the second received powers in response to determining that respective second received powers among the second received powers corresponding to a portion of the second reference signals increase and then decrease according to a measurement order of the portion of the second reference signals, the measurement order of the portion of the second reference signals corresponding to the sweeping.

11. The operation method of any of claims 1 to 9, wherein the measuring comprises:
stopping the measuring of both the first received powers and the second received powers in response to determining that:

respective first received powers among the first received powers corresponding to a portion of the first reference signals increase and then decrease according to a measurement order of the portion of the first reference signals, the measurement order of the portion of the first reference signals corresponding to the sweeping, and
respective second received powers among the second received powers corresponding to a portion of the second reference signals increase and then decrease according to a measurement order of the portion of the second reference signals, the measurement order of the portion of the second reference signals corresponding to the sweeping.

12. The operation method of any preceding claim, further comprising:

estimating received powers for sixth beam pairs based on information about a correlation between the first reception beams and the second reception beams,
wherein the determining of the first beam pair is further based on the received powers estimated for the sixth beam pairs.

13. The operation method of claim 12, wherein the information about the correlation comprises:

a ratio of a gain of a first reception beam among the first reception beams corresponding to a largest value among the first received powers to a gain of a second reception beam among the second reception beams; and
a ratio of a gain of a second reception beam among the second reception beams corresponding to a largest value among the second received powers to a gain of a first reception beam among the first reception beams.

14. The operation method of any preceding claim, wherein each of the initial reference signals comprises one of a synchronization signal block (SSB) or a channel status information-reference signal (CSI-RS).

15. A wireless communication device comprising:

a first antenna array including a plurality of first antenna elements configured to form first reception beams;
a second antenna array including a plurality of second antenna elements configured to form second reception beams, the second reception beams having a polarization different than a polarization of the first reception beams; and
processing circuitry configured to

receive, via the first antenna array and the second antenna array, initial reference signals based on sweeping of a first beam pair subset including, the initial reference signals including first reference signals received via the first reception beams and second reference signals received via the second reception beams, and the first reception beams and the second reception beams being included in the first beam pair subset,
measure first received powers of the first reference signals and second received powers of the second reference signals,
determine a first beam pair for receiving first data based on the first received powers and the second received powers,
update the first beam pair subset based on at least one of the first received powers or the second received powers to obtain an updated beam pair subset,
determine a second beam pair for receiving second data based on received powers of new reference signals for the updated beam pair subset, and
receive the second data based on the second beam pair.

# FIG. 1

EP 4 459 889 A1

FIG. 2

# FIG. 3A

WIRELESS COMMUNICATION DEVICE /100

BASE STATION /900

INITIALIZE OR UPDATE BEAM PAIR SUBSET /S101

RECEIVE REFERENCE SIGNALS FOR BEAM MANAGEMENT
S103

MEASURE RECEIVED POWERS OF REFERENCE SIGNALS BY SWEEPING INITIALIZED OR UPDATED BEAM PAIR SUBSET /S105

DETERMINE BEAM PAIR FOR DATA RECEPTION BASED ON RECEIVED POWERS /S107

RECEIVE DATA BASED ON BEAM PAIR FOR DATA RECEPTION
S109

# FIG. 3B

FIRST BEAM

| | BH_0 | BH_1 | ⋯ | BH_K−1 |
|---|---|---|---|---|
| BV_0 | Trial_0 | | | |
| BV_1 | | Trial_1 | | |
| ⋯ | | | ⋯ | |
| BV_K−1 | | | | Trial_K−1 |

SECOND BEAM

FIG. 4

START

RECEIVE REFERENCE SIGNALS BASED ON SWEEPING OF BEAM PAIR SUBSET THAT INCLUDES SECOND BEAM PAIRS FROM AMONG FIRST BEAM PAIRS FORMED BETWEEN FIRST RX BEAMS AND SECOND RX BEAMS — S201

MEASURE FIRST RECEIVED POWERS OF REFERENCE SIGNALS RECEIVED VIA FIRST RX BEAMS INCLUDED IN SECOND BEAM PAIRS AND SECOND RECEIVED POWERS OF REFERENCE SIGNALS RECEIVED VIA SECOND RX BEAMS INCLUDED IN SECOND BEAM PAIRS — S203

DETERMINE FIRST BEAM PAIR FOR DATA RECEPTION, BASED ON FIRST RECEIVED POWERS AND SECOND RECEIVED POWERS — S205

UPDATE BEAM PAIR SUBSET, BASED ON AT LEAST ONE OF FIRST RECEIVED POWERS AND SECOND RECEIVED POWERS — S207

DETERMINE NEW FIRST BEAM PAIR FOR DATA RECEPTION, BASED ON NEW FIRST RECEIVED POWERS AND NEW SECOND RECEIVED POWERS FOR UPDATED BEAM PAIR SUBSET — S209

END

# FIG. 5

START

RECEIVE REFERENCE SIGNALS ⟋S301

PERFORM SWEEPING OVER BEAM PAIR SUBSET BASED ON NUMBER OF REFERENCE SIGNALS ⟋S303

S304 — NUMBER OF REFERENCE SIGNALS LESS THAN NUMBER OF BEAM PAIRS IN BEAM PAIR SUBSET ?

Yes

No

SWEEP BEAM PAIR SUBSET BASED ON NUMBER OF REFERENCE SIGNALS ⟋S305

DETERMINE BEAM PAIR FOR DATA RECEPTION BASED ON SWEEPING OF BEAM PAIR SUBSET ⟋S307

END

SWEEP BEAM PAIR SUBSET ⟋S309

DETERMINE BEAM PAIR FOR DATA RECEPTION BASED ON SWEEPING OF BEAM PAIR SUBSET AND UPDATE BEAM PAIR SUBSET ⟋S311

SWEEP UPDATED BEAM PAIR SUBSET BASED ON THE NUMBER OF THE REMAINING REFERENCE SIGNALS ⟋S313

DETERMINE BEAM PAIR FOR DATA RECEPTION BASED ON UPDATED BEAM PAIR SUBSET ⟋S315

END

# FIG. 6A

FIRST BEAM

|  | BH_0 | BH_1 | ⋯ | BH_K-1 |
|---|---|---|---|---|
| BV_0 | Trial_0 | | | |
| BV_1 | | Trial_1 | | |
| ... | | | ... | |
| BV_K-1 | | | | Trial_K-1 |

SECOND BEAM

# FIG. 6B

FIRST BEAM

|  | BH_0 | BH_1 | ⋯ | BH_K-1 |
|---|---|---|---|---|
| BV_0 | | Trial_0 | | |
| BV_1 | | Trial_1 | | |
| ... | | ... | | |
| BV_K-1 | | Trial_K-1 | | |

SECOND BEAM

# FIG. 6C

FIRST BEAM

| | BH_0 | BH_1 | ⋯ | BH_K-1 |
|---|---|---|---|---|
| BV_0 | Trial_0 | Trial_1 | ⋯ | Trial_K-1 |
| BV_1 | | | | |
| ⋯ | | | | |
| BV_K-1 | | | | |

SECOND BEAM

# FIG. 7A

FIRST BEAM

| | BH_0 | BH_1 | ⋯ | BH_K-1 |
|---|---|---|---|---|
| BV_0 | Trial_0 | | | |
| BV_1 | | Trial_1 | | |
| ⋯ | | | ⋯ | |
| BV_K-1 | | | | Trial_K-1 |

SECOND BEAM

# FIG. 7B

FIRST BEAM

| | BH_0 | BH_1 | ⋯ | BH_K−1 |
|---|---|---|---|---|
| BV_0 | | | | |
| BV_1 | Trial_0 | Trial_1 | ⋯ | Trial_K−1 |
| ⋯ | | | | |
| BV_K−1 | | | | |

SECOND BEAM

# FIG. 7C

FIRST BEAM

| | BH_0 | BH_1 | ⋯ | BH_K−1 |
|---|---|---|---|---|
| BV_0 | Trial_0 | | | |
| BV_1 | Trial_1 | | | |
| ⋯ | ⋯ | | | |
| BV_K−1 | Trial_K−1 | | | |

SECOND BEAM

## FIG. 8A

FIRST BEAM

|  | BH_0 | BH_1 | BH_2 | ... | BH_K-3 | BH_K-2 | BH_K-1 |
|---|---|---|---|---|---|---|---|
| BV_0 | Trial_0 | | | | | | |
| BV_1 | | Trial_1 | | | | | |
| BV_2 | | | Trial_2 | | | | |
| ... | | | | ... | | | |
| BV_K-3 | | | | | Trial_K-3 | | |
| BV_K-2 | | | | | | Trial_K-2 | |
| BV_K-1 | | | | | | | Trial_K-1 |

SECOND BEAM

EP 4 459 889 A1

## FIG. 8B

FIRST BEAM

| | BH_0 | BH_1 | BH_2 | $\cdots$ | BH_K-3 | BH_K-2 | BH_K-1 |
|---|---|---|---|---|---|---|---|
| BV_0 | | | Trial_0 | | Trial_1 | Trial_2 | |
| BV_1 | | | $\cdots$ | | $\cdots$ | $\cdots$ | |
| BV_2 | | | Trial_$L^2$-3 | | Trial_$L^2$-2 | Trial_$L^2$-1 | |
| $\cdots$ | | | | | | | |
| BV_K-3 | | | | | | | |
| BV_K-2 | | | | | | | |
| BV_K-1 | | | | | | | |

SECOND BEAM

EP 4 459 889 A1

# FIG. 9A

FIRST BEAM

|  | BH_0 | BH_1 | BH_2 | BH_3 | BH_4 | ⋯ | BH_K−1 |
|---|---|---|---|---|---|---|---|
| BV_0 | Trial_0 | Trial_1 | Trial_2 | | | | |
| BV_1 | Trial_3 | Trial_4 | Trial_5 | | | | |
| BV_2 | Trial_6 | Trial_7 | Trial_8 | | | | |
| BV_3 | | | | | | | |
| BV_4 | | | | | | | |
| ⋯ | | | | | | | |
| BV_K−1 | | | | | | | |

SECOND BEAM

# FIG. 9B

|  | FIRST BEAM | | | | | | |
| --- | --- | --- | --- | --- | --- | --- | --- |
|  | BH_0 | BH_1 | BH_2 | BH_3 | BH_4 | ... | BH_K−1 |
| BV_0 | | | | | | | |
| BV_1 | | Trial_0 | Trial_1 | Trial_2 | | | |
| BV_2 | | Trial_3 | Trial_4 | Trial_5 | | | |
| BV_3 (SECOND BEAM) | | Trial_6 | Trial_7 | Trial_8 | | | |
| BV_4 | | | | | | | |
| ... | | | | | | | |
| BV_K−1 | | | | | | | |

# FIG. 10A

EP 4 459 889 A1

FIRST BEAM

|  | BH_0 | BH_1 | BH_2 | BH_3 | BH_4 | ⋯ | BH_K−1 |
|---|---|---|---|---|---|---|---|
| BV_0 | Trial_0 | Trial_1 | Trial_2 |  |  |  |  |
| BV_1 | Trial_3 | Trial_4 | Trial_5 |  |  |  |  |
| BV_2 | Trial_6 | Trial_7 | Trial_8 | Trial_9 |  |  |  |
| BV_3 |  |  |  |  |  |  |  |
| BV_4 |  |  |  |  |  |  |  |
| ⋯ |  |  |  |  |  |  |  |
| BV_K−1 |  |  |  |  |  |  |  |

SECOND BEAM

# FIG. 10B

EP 4 459 889 A1

FIRST BEAM

| | BH_0 | BH_1 | BH_2 | BH_3 | BH_4 | ⋯ | BH_K−1 |
|---|---|---|---|---|---|---|---|
| BV_0 | | | | | | | |
| BV_1 | | | Trial_0 | Trial_1 | Trial_2 | | |
| BV_2 | | | Trial_3 | Trial_4 | Trial_5 | | |
| BV_3 | | | Trial_6 | Trial_7 | Trial_8 | | |
| BV_4 | | Trial_9 | | | | | |
| ⋯ | | | | | | | |
| BV_K−1 | | | | | | | |

SECOND BEAM (label at BV_3)

# FIG. 11A

FIRST BEAM

| | BH_0 | BH_1 | BH_2 | ... | BH_K−2 | BH_K−1 |
|---|---|---|---|---|---|---|

BV_0
BV_1
BV_2
...
BV_K−2
BV_K−1

SECOND BEAM

Trial_0 | Trial_1 | Trial_2 | ... | Trial_K−2 | Trial_K−1

# FIG. 11B

FIRST BEAM

|  | BH_0 | BH_1 | BH_2 | BH_3 | ⋯ | BH_K−1 |
|---|---|---|---|---|---|---|
| BV_0 | | | | | | |
| BV_1 | | Trial_0 | Trial_1 | Trial_2 | | |
| BV_2 | | Trial_3 | Trial_4 | Trial_5 | | |
| BV_3 (SECOND BEAM) | | Trial_6 | Trial_7 | Trial_8 | | |
| ⋯ | | | | | | |
| BV_K−1 | | | | | | |

EP 4 459 889 A1

# FIG. 12A

```
        ( START )
            │
            ▼
┌───────────────────────────────┐
│ ESTIMATE RECEIVED POWERS OF    │
│ REFERENCE SIGNALS BASED ON     │──── S401
│ ANTENNA ARRAY CORRELATION      │
│ INFORMATION                    │
└───────────────────────────────┘
            │
            ▼
┌───────────────────────────────┐
│ DETERMINE BEAM PAIR FOR DATA   │
│ RECEPTION BASED ON ESTIMATED   │──── S403
│ RECEIVED POWERS                │
└───────────────────────────────┘
            │
            ▼
         ( END )
```

# FIG. 12B

START

RECEIVE REFERENCE SIGNALS BASED ON SWEEPING OF BEAM PAIR SUBSET THAT INCLUDES SECOND BEAM PAIRS FROM AMONG FIRST BEAM PAIRS FORMED BETWEEN FIRST RX BEAMS AND SECOND RX BEAMS ⌐S501

MEASURE FIRST RECEIVED POWERS OF REFERENCE SIGNALS RECEIVED VIA FIRST RX BEAMS INCLUDED IN SECOND BEAM PAIRS AND SECOND RECEIVED POWERS OF REFERENCE SIGNALS RECEIVED VIA SECOND RX BEAMS INCLUDED IN SECOND BEAM PAIRS ⌐S503

UPDATE BEAM PAIR SUBSET, BASED ON AT LEAST ONE OF FIRST RECEIVED POWERS AND SECOND RECEIVED POWERS ⌐S505

MEASURE NEW FIRST RECEIVED POWERS AND NEW SECOND RECEIVED POWERS BASED ON UPDATED BEAM PAIR SUBSET ⌐S507

ESTIMATE THIRD RECEIVED POWERS FOR THIRD BEAM PAIRS BASED ON INFORMATION ABOUT CORRELATION BETWEEN FIRST RX BEAMS AND SECOND RX BEAMS ⌐S509

DETERMINE FIRST BEAM PAIR FOR DATA RECEPTION, BASED ON NEW FIRST RECEIVED POWERS, NEW SECOND RECEIVED POWERS, AND THIRD RECEIVED POWERS ESTIMATED FOR THIRD BEAM PAIRS, AND RECEIVE DATA BASED ON FIRST BEAM PAIR ⌐S511

END

# FIG. 13

Europäisches
Patentamt

European
Patent Office

Office européen
des brevets

# EUROPEAN SEARCH REPORT

Application Number

EP 24 17 2055

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/287017 A1 (ZHU JUN [US] ET AL) 8 September 2022 (2022-09-08) * paragraph [0073]; claims 1,10 * ----- | 1-15 | INV. H04B7/06 H04B7/10 |
| Y | WO 2015/080648 A1 (ERICSSON TELEFON AB L M [SE]) 4 June 2015 (2015-06-04) * paragraph [0064] * ----- | 1-15 | |
| A | WO 2019/143567 A1 (QUALCOMM INC [US]) 25 July 2019 (2019-07-25) * page 21, lines 25-27 * ----- | 12,13 | |

TECHNICAL FIELDS
SEARCHED (IPC)

H04B

The present search report has been drawn up for all claims

| Place of search | Date of completion of the search | Examiner |
|---|---|---|
| Munich | 20 September 2024 | Belloni, Paolo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 17 2055

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2024

| Patent document cited in search report | Publication date | Patent family member(s) | Publication date |
|---|---|---|---|
| US 2022287017 A1 | 08-09-2022 | US 2022287017 A1<br>WO 2022191942 A1 | 08-09-2022<br>15-09-2022 |
| WO 2015080648 A1 | 04-06-2015 | NONE | |
| WO 2019143567 A1 | 25-07-2019 | CN 111699729 A<br>CN 115189743 A<br>EP 3744135 A1<br>US 2019230544 A1<br>US 2021321280 A1<br>WO 2019143567 A1 | 22-09-2020<br>14-10-2022<br>02-12-2020<br>25-07-2019<br>14-10-2021<br>25-07-2019 |

EPO FORM P0459

For more details about this annex : see Official Journal of the European Patent Office, No. 12/82